# EUROPÄISCHE PATENTSCHRIFT

(11) **EP 2 139 904 B1**
(45) Veröffentlichungstag und Bekanntmachung des Hinweises auf die Patenterteilung: **16.10.2013**
(21) Anmeldenummer: 08717880.2
(22) Anmeldetag: 17.03.2008
(51) Int. Cl.: C07F 9/40

(54) **VERFAHREN ZUR HERSTELLUNG EINES ALKENYLPHOSPHONSÄURE-DERIVATS**
METHOD FOR THE PRODUCTION OF AN ALKENYL PHOSPHONIC ACID DERIVATIVE
PROCÉDÉ DE FABRICATION D'UN DÉRIVÉ D'ACIDE ALCÉNYLPHOSPHONIQUE

(30) Priorität: 22.03.2007 EP 07104651
(43) Veröffentlichungstag der Anmeldung: 06.01.2010
(73) Patentinhaber: BASF SE, 67056 Ludwigshafen (DE)
(72) Erfinder: BIEL, Markus Christian, 68159 Mannheim (DE); KESSINGER, Roland, 69469 Weinheim (DE); SOMMER, Jens, 59423 Unna (DE); BLÜMEL, Janet, College Station, TX 77840-1775 (US)
(86) Internationale Anmeldenummer: PCT/EP2008/053143
(87) Internationale Veröffentlichungsnummer: WO 2008/113777

(56) Entgegenhaltungen:
- EP-A1- 1 203 773
- US-A- 3 093 672
- US-A1- 2003 166 612
- HAN, LI-BIAO ET AL: "Nickel-Catalyzed Addition of P(O)-H Bonds to Propargyl Alcohols: One-Pot Generation of Phosphinoyl 1,3-Butadienes" ORGANIC LETTERS , 7(14), 2909-2911 CODEN: ORLEF7; ISSN: 1523-7060, 2005, XP002476434
- HAN, LI-BIAO ET AL: "Palladium-Catalyzed Hydrophosphorylation of Alkynes via Oxidative Addition of HP(O)(OR)2" JOURNAL OF THE AMERICAN CHEMICAL SOCIETY , 118(6), 1571-2 CODEN: JACSAT; ISSN: 0002-7863, 1996, XP002476435
- HAN, LI-BIAO ET AL: "Efficient and Selective Nickel-Catalyzed Addition of H-P(O) and H-S Bonds to Alkynes" JOURNAL OF THE AMERICAN CHEMICAL SOCIETY , 126(16), 5080-5081 CODEN: JACSAT; ISSN: 0002-7863, 2004, XP002476436
- CHEMICAL BUYERS: 'N,N'-Bis(1-methylpropyl)-1,4-phenylenediam ine', [Online] 01 Januar 2011, XP055006186 Gefunden im Internet: <URL:http://www.chemical-buyers.com/msds/de tail-8009.html> [gefunden am 2011-09-05]

## Beschreibung

Die vorliegende Erfindung betrifft ein Verfahren zur Herstellung eines Alkenylphosphonsäure-Derivats durch Umsetzung eines Phosphonsäure-Derivats mit einem Alkin in Gegenwart eines Komplexkatalysator-Systems.

Vinylphosphonsäure-Derivate, insbesondere Vinylphosphonsäuredialkylester, sind als Vorprodukte für die Herstellung von Vinylphosphonsäuren sowie als Monomere zur Copolymerisation für die Herstellung von Klebstoffen und flammfesten Kunststoffen von Bedeutung.

Zu ihrer Herstellung sind unterschiedliche Verfahren bekannt.

Ein Verfahren zur Herstellung von Alkenylphosphonsäurediestern ist die Addition von Alkinen an Phosphonsäurediestern in Gegenwart eines Palladium-Komplexkatalysators. Vorteil dieser Syntheseroute ist eine reine Additionsreaktion ohne Bildung stöchiometrischer Mengen an Neben- oder Koppelprodukten. Nachteil ist die Verwendung des teueren Edelmetallkatalysators.

US-Patent 3,673,285 beschreibt die Addition von Alkinen an Phosphonsäurediestern unter Bildung von Alkenylphosphonsäurediestern bei Temperaturen von 130 bis 200°C in Gegenwart von Nickel-Komplexkatalysatoren aus der Reihe Dicarbonyl-bis(triphenylphosphino)-nickel(0), Bis(tris(hydroxymethyl)phosphino)-nickel(II)-chlorid, Bis(trin-butylphosphino)-nickel(II)-bromid und Tetracarbonyl-nickel(0). Bei der Addition von Ethin an Phosphorigsäurediethylester (Diethylphosphit) wurde in Gegenwart von Bis(tri-n-butylphosphino)-nickel(II)-bromid eine Aubeute an Vinylphosphonsäuredieethylester von 40 % erreicht (Beispiel 15). Nachteile dieses Verfahrens sind eine geringe Ausbeute von deutlich unter 50 % und die erforderliche hohe Reaktionstemperatur von bis zu 200°C, welche zu einer exothermen Zersetzung der Phosphonsäureethylester führt.

EP-A1-1 203 773 (BASF Aktiengesellschaft) beschreibt ein Verfahren zur Herstellung von Alkenylphosphonsäure-Derivaten durch Umsetzung von Phosphonsäure-Derivaten mit Alkinen in Gegenwart eines Komplexkatalysator-Systems, wobei man ein Komplexkatalysator-System verwendet, welches (a) Nickel und (b) ein Phosphin mit mindestens zwei dreibindigen Phosphoratomen enthält.

EP-A- 1 528 064 beschreibt ein Verfahren zur Herstellung eines Alkenylphosphonsäure-Derivats durch Umsetzung eines Phosphonsäure-Derivats mit einem Alkin in Gegenwart eines Komplexkatalysator-Systems, welches dadurch gekennzeichnet ist, dass das Komplexkatalysator-System (a) Nickel, (b) ein Phosphin mit mindestens zwei dreibindigen Phosphoratomen und (c) ein Phosphin mit einem dreibindigen Phosphoratom enthält.

EP-A- 1 528 065 (BASF Aktiengesellschaft) beschreibt ein entsprechendes Verfahren bei dem die Zugabe des Alkins erst erfolgt, nachdem das Phosphonsäure-Derivat für mindestens eine Minute mit dem Komplexkatalysator-System in Kontakt gebracht wurde.

Diese Verfahren bewirken eine Verbesserung der Ausbeute und Selektivität. Eine weitere Verbesserung der Ausbeute und Selektivität ist jedoch noch möglich und gewünscht. Weitere Verbesserungen können gegebenenfalls erreicht werden, wenn die bei der Umsetzung verwendeten technischen Phosphonsäure-Derivate vorab, z.B. durch Destillation, gereinigt und Nebenprodukte, z.B. Säuren, abgetrennt werden.

Es bestand die Aufgabe, ein Verfahren zur Herstellung von AlkenylphosphonsäureDerivaten zu finden, welches die Nachteile des Stands der Technik überwindet, keine Koppelprodukte bildet, eine Reaktionstemperatur von deutlich unterhalb 200°C erlaubt, eine hohe Ausbeute von deutlich über 50 %, insbesondere über 75 %, ermöglicht, ohne Einsatz eines teueren Edelmetallkatalysators und auch ohne vorherige Reinigung bzw. Destillation der Phosphonsäure-Derivate auskommt

Demgemäß wurde das Verfahren zur Herstellung eines Alkenylphosphonsäure-Derivats durch Umsetzung eines Phosphonsäure-Derivats, wobei es sich um eine Verbindung der Formel II handelt 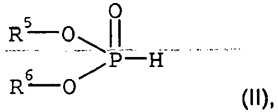 in der R⁵ und R⁶ jeweils unabhängig voneinander
C₁- bis C₁₂-Alkyl, C₆- bis C₁₀-Aryl, C₇- bis C₁₀-Aralkyl oder C₇- bis C₁₀-Alkaryl bedeuten,
mit einem Ethin oder Propin in Gegenwart eines Komplexkatalysator-Systems und 0,05 bis 5 mol%, bezogen auf das Phosphonsäure-Derivat, einer Base, deren konjugierte Säure einen pKa Wert in Dimethylsulfoxid (25°C, 1 bar) von 11,5 bis 20 hat, gefunden.

### Zum Phosphonsäurederivat

Die beim erfindungsgemäßen Verfahren einzusetzenden Phosphonsäure-Derivate sind allgemein bekannt und besitzen die Formel (II)

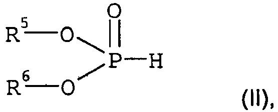

Reste R⁵ und R⁶ sind ausgewählt aus
* C₁- bis C₁₂-Alkyl, besonders bevorzugt Methyl, Ethyl, 1-Propyl, 2-Propyl, 1-Butyl, 2-Butyl, 2-Methyl-1-propyl, 2-Methyl-2-propyl, 1-Pentyl, 1-Hexyl, 1-Octyl, 2-Ethyl-1-hexyl, 1-Decyl und 1-Dodecyl;
* C₆- bis C₁₀-Aryl, besonders bevorzugt Phenyl;
* C₇- bis C₁₀-Aralkyl, besonders bevorzugt Phenylmethyl; und
* C₇- bis C₁₀-Alkaryl, besonders bevorzugt 2-Methylphenyl, 3-Methylphenyl und 4-Methylphenyl.

Insbesondere handelt es sich bei dem Phosphonsäurederivat um ein Dialkyl- oder Diarylester.

Ganz besonders bevorzugt setzt man beim erfindungsgemäßen Verfahren als Phosphonsäure-Derivate den Dimethylester, den Diethylester, den Dipropylester, den Dibutylester, den Di-(2-ethylhexyl)-ester oder den Diphenylester der Phosphonsäure ein.

### Zum Alkin

Als Alkine werden Ethin oder Propin eingesetzt, ganz besonders bevorzugt ist Ethin (Acetylen).

### Zum Komplexkatalysator-System

Das Verfahren wird vorzugsweise in Gegenwart eines Ni -Komplexes ausgeübt.

insbesondere handelt es sich bei dem Komplexkatalysator-System um einen phosphor-organischen Ni -Komplex.

Es kann sich dabei insbesondere um phosphororganische Komplexe handeln, in denen das Nickel zweiwertig ist, Ni (II), oder als Nickelatom in der Oxidationsstufe Null vorliegt [= Ni(0)].
Ni (0) vorliegt. Ganz besonders bevorzugt sind phosphororganische Ni (0) Komplexe.

Derartige phosphororganische Ni (0) Komplexe enthalten vorzugsweise
(a) Nickel,
(b) mindestens ein Phosphin mit mindestens zwei dreibindigen Phosphoratomen und gegebenenfalls zusätzlich
(c) mindestens ein Phosphin mit einem dreibindigen Phosphoratom

### Phosphin (b)

Im allgemeinen Sprachgebrauch werden Phosphine mit einem dreibindigen Phosphoratom als Monophosphine, Phosphine mit zwei dreibindigen Phosphoratomen als Diphosphine, Phosphine mit drei dreibindigen Phosphoratomen als Triphosphine, usw. bezeichnet.

Bevorzugt enthalten die Komplexe Phosphine mit zwei dreibindigen Phosphoratomen.

Im Allgemeinen besitzen die beim erfindungsgemäßen Verfahren verwendeten Phosphine mit mindestens zwei dreibindigen Phosphoratomen die allgemeine Formel (I) 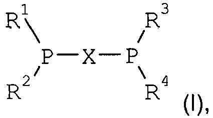 in der R¹, R², R³ und R⁴ jeweils unabhängig voneinander einen Kohlenstoff enthaltenden organischen Rest bedeuten und X für eine Kohlenstoff enthaltende organische Brückengruppe steht.

Unter einem Kohlenstoff enthaltenden organischen Rest ist ein unsubstituierter oder substituierter, aliphatischer, aromatischer oder araliphatischer Rest mit 1 bis 30 Kohlenstoffatomen zu verstehen. Dieser Rest kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder -PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, Iod und/oder eine Cyanogruppe (bei dem Rest R handelt es sich hierbei ebenfalls um einen Kohlenstoff enthaltenden organischen Rest). Enthält der Kohlenstoff enthaltende organische Rest ein oder mehrere Heteroatome, so kann dieser auch über ein Heteroatom gebunden sein. Somit sind beispielsweise auch Ether-, Thioether- und tertiäre Aminogruppen eingeschlossen. Bei dem Kohlenstoff enthaltenden organischen Rest kann es sich um einen einwertigen oder auch mehrwertigen, beispielsweise zweiwertigen, Rest handeln.

Unter einer Kohlenstoff enthaltenden organischen Brückengruppe ist eine unsubstituierte oder substituierte, aliphatische, aromatische oder araliphatische zweiwertige Gruppe mit 1 bis 20 Kohlenstoffatomen und 1 bis 10 Atomen in der Kette zu verstehen. Die organische Brückengruppe kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder -PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, Iod und/oder eine Cyanogruppe (bei dem Rest R handelt es sich hierbei ebenfalls um einen Kohlenstoff enthaltenden organischen Rest). Enthält die organische Brückengruppe ein oder mehrere Heteroatome, so kann diese auch jeweils über ein Heteroatom gebunden sein. Somit sind beispielsweise auch Ether-, Thioether- und tertiäre Aminogruppen eingeschlossen.

Bevorzugt setzt man beim erfindungsgemäßen Verfahren ein Phosphin (I) ein, bei dem die Reste R¹, R², R³ und R⁴ unabhängig voneinander für
* einen unverzweigten oder verzweigten, acyclischen oder cyclischen, unsubstituierten oder substituierten Alkylrest mit 1 bis 20 aliphatischen Kohlenstoffatomen, bei dem eine oder mehrere der CH₂-Gruppen auch durch Heteroatome, wie -O-, oder durch Heteroatom enthaltende Gruppen, wie -CO- oder -NR-, ersetzt sein können und bei dem ein oder mehrere der Wasserstoffatome durch Substituenten, wie beispielsweise Arylgruppen ersetzt sein können;
* einen unsubstituierten oder substituierten aromatischen Rest mit einem Ring oder zwei oder drei kondensierten Ringen, bei dem eines oder mehrere Ringatome durch Heteroatome, wie beispielseise Stickstoff, substituiert sein können und bei dem ein oder mehrere der Wasserstoffatome durch Substituenten, wie beispielsweise Alkyl- oder Arylgruppen ersetzt sein können;
   oder bei dem die Reste R¹ zusammen mit R² und/oder R³ zusammen mit R⁴ für
* eine unsubstituierte oder substituierte, aliphatische, aromatische oder araliphatische Gruppe mit 3 bis 10 Atomen in der Kette;
stehen.

Als Beispiele der bevorzugten einwertigen Reste R¹, R², R³ und R⁴ seien Methyl, Ethyl, 1-Propyl, 2-Propyl (sek.-Propyl), 1-Butyl, 2-Butyl (sek.-Butyl), 2-Methyl-1-propyl (isoButyl), 2-Methyl-2-propyl (tert.-Butyl), 1-Pentyl, 2-Pentyl, 3-Pentyl, 2-Methyl-2-butyl (tert.-Amyl), 1-Hexyl, 2-Hexyl, 3-Hexyl, 2-Methyl-2-pentyl, 3-Methyl-3-pentyl, 2-Methoxy-2-propyl, Methoxy, Ethoxy, 1-Propoxy, 2-Propoxy (sek.-Propoxy), 1-Butoxy, 2-Butoxy (sek.-Butoxy), 2-Methyl-1-propoxy (iso-Butoxy), 2-Methyl-2-propoxy (tert.-Butoxy), 1-Pentoxy, 2-Pentoxy, 3-Pentoxy, 2-Methyl-2-butoxy (tert.-Amoxy), 1-Hexoxy, 2-Hexoxy, 3-Hexoxy, 2-Methyl-2-pentoxy, 3-Methyl-3-pentoxy, Phenyl, 2-Methylphenyl (o-Tolyl), 3-Methylphenyl (m-Tolyl), 4-Methylphenyl (p-Tolyl), 2,6-Dimethylphenyl, 2,4-Dimethylphenyl, 2,4,6-Trimethylphenyl, 2-Methoxyphenyl, 3-Methoxyphenyl, 4-Methoxyphenyl, 2-Pyridyl, 3-Pyridyl, 4-Pyridyl, 3-Pyridazinyl, 4-Pyridazinyl, 5-Pyridazinyl, 2-Pyrimidinyl, 4-Pyrimidinyl, 5-Pyrimidinyl, 2-Pyrazinyl, 2-(1,3,5-Triazin)yl, 1-Naphthyl, 2-Naphthyl, 2-Chinolyl, 8-Chinolyl, 1-Isochinolyl und 8-Isochinolyl genannt.

Als Beispiele der bevorzugten zweiwertigen Reste R¹ zusammen mit R² und/oder R³ zusammen mit R⁴ seien 1,4-Butylen, 1,4-Dimethyl-1,4-butylen, 1,1,4,4-Tetramethyl-1,4-butylen, 1,4-Dimethoxy-1,4-butylen, 1,4-Dimethyl-1,4-dimethoxy-1,4-butylen, 1,5-Pentylen, 1,5-Dimethyl-1,5-pentylen, 1,5-Dimethoxy-1,5-pentylen, 1,1,5,5-Tetramethyl-1,5-pentylen, 1,5-Dimethyl-1,5-dimethoxy-1,5-pentylen, 3-Oxa-1,5-pentylen, 3-Oxa-1,5-dimethyl-1,5-pentylen, 3-Oxa-1,5-dimethoxy-1,5-pentylen, 3-Oxa-1,1,5,5-tetramethyl-1,5-pentylen, 3-Oxa-1,5-dimethyl-1,5-dimethoxy-1,5-pentylen, 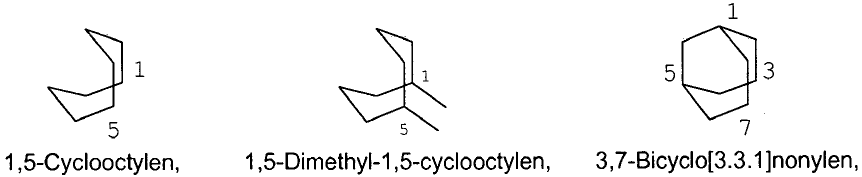 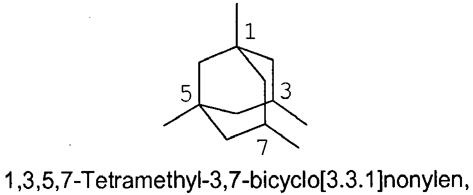 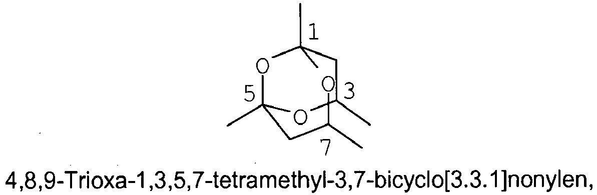 genannt.

Besonders bevorzugt setzt man beim erfindungsgemäßen Verfahren ein Phosphin (I) ein, bei dem R¹, R², R³ und/oder R⁴ unabhängig voneinander einen unsubstituierten oder substituierten C₃- bis C₁₂-Alkylrest, bei dem an das α-Kohlenstoffatom höchstens ein Atom aus der Reihe Wasserstoff, Fluor, Chlor, Brom und Iod gebunden ist, bedeuten; und/oder bei dem R¹, R², R³ und/oder R⁴ unabhängig voneinander einen unsubstituierten oder substituierten aromatischen Rest mit 6 Ringatomen, bei dem ein, zwei oder drei Ringatome durch Stickstoff substituiert sein können, bedeuten; und/oder bei dem R¹ zusammen mit R² und/oder R³ zusammen mit R⁴ eine unsubstituierte oder substituierte, aliphatische, aromatische oder araliphatische Gruppe mit 4 bis 7 Atomen in der Kette und insgesamt nicht mehr als 30 Kohlenstoffatomen, bedeuten.

Bei dem unsubstituierten oder substituierten C₃- bis C₁₂-Alkylrest, bei dem an das α-Kohlenstoffatom höchstens ein Atom aus der Reihe Wasserstoff, Fluor, Chlor, Brom und Iod gebunden ist, handelt es sich um einen sogenannten, am α-Kohlenstoffatom verzweigten Alkylrest. Bevorzugt sind an das α-Kohlenstoffatom mindestens zwei weitere Kohlenstoffatome gebunden. Bei dem dritten, an das α-Kohlenstoffatom gebundene Atom handelt es sich bevorzugt um Wasserstoff, Kohlenstoff oder um ein Heteroatom, wie beispielsweise Sauerstoff, Stickstoff oder Schwefel. Als bevorzugte Beispiele seien 2-Propyl (sek.-Propyl), 2-Butyl (sek.-Butyl), 2-Methyl-2-propyl (tert.-Butyl), 2-Methyl-2-butyl (tert.-Amyl) und 2-Methoxy-2-propyl genannt.

Als bevorzugte Beispiele für einen unsubstituierten oder substituierten aromatischen Rest mit 6 Ringatomen, bei dem ein, zwei oder drei Ringatome durch Stickstoff substituiert sein können, seien Phenyl, 2-Methylphenyl (o-Tolyl), 3-Methylphenyl (m-Tolyl), 4-Methylphenyl (p-Tolyl), 2,6-Dimethylphenyl, 2,4-Dimethylphenyl, 2,4,6-Trimethylphenyl und 2-Pyridyl genannt.

Als bevorzugte Beispiele der zweiwertigen Reste R¹ zusammen mit R² und/oder R³ zusammen mit R⁴ seien 1,1,4,4-Tetramethyl-1,4-butylen, 1,4-Dimethyl-1,4-dimethoxy-1,4-butylen, 1,1,5,5-Tetramethyl-1,5-pentylen, 1,5-Dimethyl-1,5-dimethoxy-1,5-pentylen, 1,5-Dimethyl-1,5-cyclooctylen, 1,3,5,7-Tetramethyl-3,7-bicyclo[3.3.1]nonylen und 4,8,9-Trioxa-1,3,5,7-tetramethyl-3,7-bicyclo[3.3.1]nonylen genannt.

Ganz besonders bevorzugt setzt man beim erfindungsgemäßen Verfahren ein Phosphin (I) ein, bei dem die Reste R¹, R², R³ und R⁴ jeweils eine 2-Methyl-2-propyl-(tert.-Butyl-) oder eine Phenyl-Gruppe bedeuten.

Bevorzugt setzt man beim erfindungsgemäßen Verfahren ein Phosphin (I) ein, bei dem X für eine unsubstituierte oder substituierte, aliphatische, aromatische oder araliphatische Gruppe mit 1 bis 8 Atomen, bevorzugt 2 bis 4 Atomen, in der Kette und insgesamt nicht mehr als 20 Kohlenstoffatomen, steht. Bei der genannten Gruppe können eine oder mehrere der CH₂-Gruppen durch Heteroatome, wie etwa -O-, oder durch Heteroatom enthaltende Gruppen, wie etwa -CO- oder -NR-, und/oder eines oder mehrere der aromatischen Ringatome durch Heteroatome, wie etwa Stickstoff, substituiert sein.

Als Beispiele der bevorzugten Brückengruppe X seien 1,2-Ethylen, 1,3-Propylen, 1,2-Propylen, 1,4-Butylen, 2-Methyl-1,3-propylen, 1,5-Pentylen, 2,2-Dimethyl-1,3-propylen, 1,6-hexylen, -O-CH₂CH₂-O-, -O-CH₂CH₂CH₂-O-, o-Phenylen, o-Xylylen (= ortho -CH₂-C₆H₄-CH₂-) oder 2,2'-Biphenylen genannt.

Besonders bevorzugt setzt man beim erfindungsgemäßen Verfahren ein Phosphin (I) ein, bei dem die Brückengruppe X für eine 1,2-Ethylen-, 1,3-Propylen-, 1,4-Butylen-oder o-Xylylen-Gruppe steht.

Ganz besonders bevorzugt setzt man beim erfindungsgemäßen Verfahren ein Phosphin (I) ein, bei dem die Reste R¹ bis R⁴ jeweils eine 2-Methyl-2-propyl- (tert.-Butyl-) oder eine Phenyl-Gruppe bedeuten und X für eine 1,2-Ethylen-, 1,3-Propylen-, 1,4-Butylen- oder o-Xylylen-Gruppe steht. Als ganz besonders bevorzugte Beispiele seien 1,2-Bis(di-tert.-butyl-phosphino)-ethan, 1,2-Bis(diphenylphosphino)-ethan, 1,3-Bis(di-tert.-butyl-phosphino)-propan, 1,3-Bis(diphenylphosphino)-propan, 1,4-Bis(di-tert.-butyl-phosphino)-butan, 1,4-Bis(diphenylphosphino)-butan, Bis(di-tert.-butyl-phosphino)-o-xylol und Bis(diphenylphosphino)-o-xylol, insbesondere 1,3-Bis(di-tert.-butyl-phosphino)-propan und 1,3-Bis(diphenylphosphino)-propan genannt.

Die Synthese von Diphosphinen ist allgemein bekannt und beispielsweise in L. Brandsma et al., "Application of Transition Metal Catalysts in Organic Synthesis", Springer-Verlag, Berlin 1997, Seiten 6 bis 9, beschrieben.

### Phosphin (c)

Neben dem vorstehenden Phosphin (b) mit mindestens zwei dreibindigen Phosphoratomen kann der Komplex gegebenenfalls zusätzlich mindestens ein Phosphin mit einem dreibindigen Phosphoratom (c) enthalten. In einer besonderen Ausführungsform enthält der Komplex sowohl Phosphin (b) als auch Phosphin (a).

Im Allgemeinen handelt es sich bei dem zusätzlichen Phosphin mit einem dreibindigen Phosphoratom (c) im Ni-Komplexkatalysator-System um ein Phosphin der allgemeinen Formel (IV) 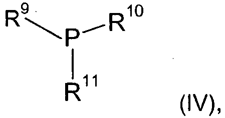 in der R⁹, R¹⁰, R¹¹ jeweils unabhängig voneinander einen Kohlenstoff enthaltenden organischen Rest bedeuten.

Unter einem Kohlenstoff enthaltenden organischen Rest ist ein unsubstituierter oder substituierter, aliphatischer, aromatischer oder araliphatischer Rest mit 1 bis 30 Kohlenstoffatomen zu verstehen. Dieser Rest kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder -PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, Iod und/oder eine Cyanogruppe (bei dem Rest R handelt es sich hierbei ebenfalls um einen Kohlenstoff enthaltenden organischen Rest). Enthält der Kohlenstoff enthaltende organische Rest ein oder mehrere Heteroatome, so kann dieser auch über ein Heteroatom gebunden sein. Somit sind beispielsweise auch Ether-, Thioether- und tertiäre Aminogruppen eingeschlossen. Bei dem Kohlenstoff enthaltenden organischen Rest kann es sich um einen einwertigen oder auch mehrwertigen, beispielsweise zweiwertigen, Rest handeln.

Bevorzugt stehen R⁹, R¹⁰, R¹¹ (unabhängig von R¹⁴) für Reste und Gruppen wie sie auch oben für R¹⁻⁴ definiert wurden.

Ganz besonders bevorzugt stehen R⁹, R¹⁰, R¹¹ für einen C₃₋₆-cycloaliphatischen und/oder aromatischen Rest wie Cyclohexyl oder Phenyl.

Bei dem Phosphin mit einem dreibindigen Phosphoratom (c) im Ni-Komplexkatalysator-System mit der allgemeinen Formel (IV) handelt es sich in einer bevorzugten Ausführungsform um Triphenylphosphin und/oder Tricyclohexylphosphin.

### Herstellung des Komplexes

Beim erfindungsgemäßen Verfahren wird das Komplexkatalysator-System im Allgemeinen durch Zusammenfügen eines Ni(O)-Komplexes und den gewünschten Phosphinen (b, bzw b und c), oder durch Zusammenfügen einer Ni(II)-Verbindung, eines Reduktionsmittels und den gewünschten Phosphinen (b, bzw b und c), hergestellt.

Da auch das jeweilige Phosphonsäure-Derivat als Reduktionsmittel wirken kann, ist das Komplexkatalysator-System auch durch Zusammenfügen einer Ni(II)-Verbindung und den Phosphinen ohne weiteres Reduktionsmittel erhältlich.

Als Ni(0)-Komplexe sind bei Durchführung der erstgenannten Variante prinzipiell alle Ni-Komplexe geeignet, welche unter den Reaktionsbedingungen mit dem Phosphin unter Bildung des Komplexkatalysator-Systems reagieren. Als Beispiele geeigneter Ni-Komplexe seien Tetracarbonyl-nickel, Bis(cycloocta-1,5-dien)nickel und (Cyclododeca1,5,9-trien)nickel genannt.

Die für die zweitgenannte Variante erforderlichen Ni(II)-Verbindungen können anorganischer, organischer oder gemischter Natur sein. Als Beispiele seien Nickel(II)-halogenide (z.B. NiCl₂), Nickel(II)-sulfat, Nickel(II)-acetylacetonat, 1,3-Bis(diphenyl-phosphino)-propan-nickel(II)-chlorid, Hexammin-nickel(II)-chlorid, Nickel(II)-bromid. Diethylenglykoldimethylether-Komplexe, Dimethylnickel(II)-Komplexe (CH₃)₂NiL₂ (L = z.B. Triphenylphosphin, Triethylphosphin, Tributylphosphin) und Dimethylnickel(II)-Komplexe (CH₃)₂NiL (L = z.B. Tetramethylethylendiamin (TMEDA), Bis(diphenylphosphino)propan, Bis(diphenylphosphino)butan) genannt. Geeignete Reduktionsmittel sind beispielsweise elementares Zink, Trialkylbor-Verbindungen, Trialkylaluminium-Verbindungen, Diisobutylaluminiumhydrid und Phosphonsäure-Derivate.

Das Komplexkatalysator-System kann in einem separaten Schritt vor der eigentlichen Alkenylierung des Phosphonsäure-Derivats als auch in-situ durch Zusammenfügen der genannten Komponenten hergestellt werden.

Die Temperatur bei der Herstellung des Komplexkatalysator-Systems beträgt im Allgemeinen 30 bis 120°C, bevorzugt 60 bis 110°C.

Als Lösungsmittel kann im Allgemeinen das Phosphonsäure-Derivat, sofern dies unter den Reaktionsbedingungen flüssig ist, eingesetzt werden. Es ist aber auch möglich und gegebenenfalls vorteilhaft, das Komplexkatalysator-System in Gegenwart eines weiteren, inerten Lösungsmittels herzustellen. Vorzugsweise setzt man dann die selben Lösungsmittel ein, welche auch als Lösungsmittel für die Alkenylierungsreaktion eingesetzt werden können und weiter unten beschrieben sind.

Beim erfindungsgemäßen Verfahren setzt man im Allgemeinen ein Molverhältnis zwischen den Phosphinen (bei mehreren Phosphinen in molarer Summe) und dem Nickel des Komplexkatalysator-Systems von 0,5 bis 6, bevorzugt von 1 bis 4 und besonders bevorzugt von 1,5 bis 2,5 ein.

Bei Komplexen mit sowohl Phosphinen (b) als auch Phosphinen (c) beträgt das Molverhältnis Nickel : (Phosphin mit mindestens zwei dreibindigen Phosphoratomen) : (Phosphin mit einem dreibindigen Phosphoratom) bevorzugt 1 : (0,5-2) : (1-4), insbesondere 1 : (1-1,3) : (1,5-2).

Das Molverhältnis zwischen dem Nickel des Komplexkatalysator-Systems und dem Phosphor des Phosphonsäure-Derivats und den daraus entstandenen Produkten beträgt beim erfindungsgemäßen Verfahren im Allgemeinen 0,01 bis 10 %, bevorzugt 0,05 bis 5 % und besonders bevorzugt 0,05 bis 3 %.

### Zur Base

Das erfindungsgemäße Verfahren wird in Gegenwart einer Base, deren konjugierte Säure einen pKa Wert von 11,5 bis 20 aufweist, durchgeführt. Der pKa Wert gibt die Säurestärke an und ist der negative dekadische Logarithmus der Säurekonstanten.

Der pka- Wert gibt die Säurestärke an und wird in Dimethylsulfoxid bei 25°C, 1 bar gemessen.

In einer ganz besonderen Ausführungsform ist der pka -Wert 11,5 bis 12, 5.

Vorzugsweise handelt es sich bei der Base um eine organische Stickstoff-verbindung.

Bei der Base handelt es sich im allgemeinen um eine niedermolekulare Verbindung mit einem Molgewicht kleiner 1000 g/mol, insbesondere kleiner 500 g/mol.

Besonders bevorzugt ist 1,8-Diazabicyclo[5.4.0]undec-7-en (DBU).

Die Base wird vorzugsweise in Mengen von 0,1 bis 5 mol %, besonders bevorzugt in Mengen von 0,2 bis 3 mol% und ganz besonders bevorzugt in Mengen von 0,5 bis 2 mol %, bezogen auf das Phosphonsäure-Derivat eingesetzt.

### Zur Umsetzung

Das erfindungsgemäße Verfahren kann insbesondere bei einer Temperatur von 0 bis 200°C, bevorzugt 20 bis 150°C, besonders bevorzugt 50 bis 120°C, insbesondere 50 bis 100°C, durchgeführt werden.

Es erfolgt im Allgemeinen bei einem Druck von 0,01 bis 5 MPa abs., bevorzugt 0,05 bis 2,5 MPa abs., besonders bevorzugt 0,05 bis 0,14 MPa abs., insbesondere bei Atmosphärendruck.

Das erfindungsgemäße Verfahren kann in Abwesenheit eines zusätzlichen Lösungsmittels ("lösungsmittelfrei") oder in Gegenwart eines inerten Lösungsmittels durchgeführt werden. Als inerte Lösungsmittel sind Lösungsmittel zu verstehen, welche unter den eingestellten Reaktionsbedingungen chemisch nicht mit den eingesetzten Verbindungen reagieren. Geeignete inerte Lösungsmittel sind beispielsweise Tetrahydrofuran, 1,4-Dioxan, N-Methyl-pyrrolidon, N-Methyl-piperidon, Dimethylsulfoxid, Toluol, Xylol, Glykolether (wie z.B. 1,2-Dimethoxyethan (Ethylenglykoldimethylether), Bis(2-methoxyethyl)-ether (Diethylenglykoldimethylether), Triethylenglykoldimethylether oder Tetraethylenglykoldimethylether), Dimethylformamid, Dimethylformanilid, Chlorbenzol und deren Gemische. Der Zusatz eines inerten Lösungsmittels kann beispielsweise beim Einsatz höhermolekularer, zähflüssiger oder unter Reaktionsbedingungen fester Phosphonsäure-Derivate von Vorteil sein.

Es ist gegebenenfalls von Vorteil, das erfindungsgemäße Verfahren in Gegenwart eines sogenannten Radikalinhibitors als Additiv durchzuführen. Als Radikalinhibitoren prinzipiell geeignet sind die allgemein technisch üblichen Inhibitoren, wie beispielsweise N,N'-Bis(1-methylpropyl)-1,4-phenylendiamin, 2,6-Di-tert.-butyl-4-methyl-phenol oder 1,2-Dihydroxybenzol (Brenzcatechin). Wird ein Radikalinhibitor eingesetzt, so wird in der Regel ein Molverhältnis zwischen dem Radikalinhibitor und dem Phosphor des Phosphonsäure-Derivats und den daraus entstandenen Produkten von 0,01 bis 10 %, bevorzugt 0,05 bis 5 % und besonders bevorzugt 0,5 bis 3 % eingestellt.

Ganz besonders bevorzugt ist beim erfindungsgemäßen Verfahren die Herstellung von Ethenylphosphonsäuredimethylester, Ethenylphosphonsäurediethylester, Ethenyl-phosphonsäuredi-n-propylester und Ethenylphosphonsäuredi-n-butylester.

Das erfindungsgemäße Verfahren kann diskontinuierlich, halbkontinuierlich oder kontinuierlich durchgeführt werden.

In einer beispielhaften Ausführungsform zur diskontinuierlichen Durchführung werden die Phosphine, (z.B. die beiden Phosphine (b, c), insbesondere die beiden Phosphine gemäß den Formeln I und IV), der Ni-(0) Komplex (beziehungsweise die Ni(II)-Verbindung und das Reduktionsmittel), das Phosphonsäure-Derivat, die Base, gegebenenfalls ein Lösungsmittel und gegebenenfalls ein Radikalinhibitor zusammengegegeben, vermischt und auf Reaktionsbedingung gebracht. Nach kurzer Zeit, im Allgemeinen nach 1 bis 60 Min, bevorzugt 5 bis 30 Min., wird das Alkin in die auf Reaktionsbedingungen gebrachte Reaktionsmischung zugegeben. Nach Beendigung der Reaktion wird das Reaktionsgemisch zur bevorzugt destillativen Aufarbeitung weitergeleitet und das gewünschte Alkenylphösphonsäure-Derivat isoliert.

In einer beispielhaften Ausführungsform zur halbkontinuierlichen Durchführung werden die Phosphine, (z.B. die beiden Phosphine (b, c), insbesondere die beiden Phosphine gemäß den Formeln I und IV), der Ni (0)-Komplex (beziehungsweise die Ni(II)-Verbindung und das Reduktionsmittel), das Phosphonsäure-Derivat, die Base, gegebenenfalls ein Lösungsmittel und gegebenenfalls ein Radikalinhibitor zusammengegegeben, vermischt und auf Reaktionstemperatur gebracht. Das Alkin wird nun, bevorzugt nachdem die Reaktionsmischung kurze Zeit, im Allgemeinen 1 bis 60 Min, bevorzugt 5 bis 30 Min., auf Reaktionstemperatur gehalten wurde, bis zum Erreichen der gewünschten Menge kontinuierlich zugeführt. Vorteilhaft ist die Zugabe des Alkins, nachdem die beiden Phosphine (b, c), der Ni-Komplex (beziehungsweise die Ni(II)-Verbindung und das Reduktionsmittel) und das Phosphonsäure-Derivat zusammengegeben, vermischt und auf Reaktionsbedingungen gebracht wurden. Die Zufuhr kann in gasförmiger oder flüssiger Form erfolgen. Bei der Zugabe in flüssiger Form kann reines, flüssiges Alkin oder auch eine Lösung in einem Lösungsmittel eingesetzt werden. Nach Beendigung der Zufuhr an Alkin kann das Reaktionsgemisch noch eine weitere Zeit unter den Reaktionsbedingungen belassen werden. Nach Beendigung der Reaktion wird das Reaktionsgemisch zur bevorzugt destillativen Aufarbeitung weitergeleitet und das gewünschte Alkenylphosphonsäure-Derivat isoliert.

In einer beispielhaften Ausführungsform zur kontinuierlichen Durchführung werden die Phosphine (z.B. beiden Phosphine (b, c), insbesondere die beiden Phosphine gemäß den Formeln I und IV), der Ni-Komplex (beziehungsweise die Ni(II)-Verbindung und das Reduktionsmittel), die Base, gegebenenfalls ein Lösungsmittel und gegebenenfalls ein Radikalinhibitor zusammengegegeben, vermischt und auf Reaktionstemperatur gebracht. Das Phosphonsäure-Derivat und das Alkin werden nun kontinuierlich im gewünschten Verhältnis zudosiert. Im Allgemeinen wird das Phosphonsäure-Derivat in flüssiger Form, gegebenenfalls gelöst in einem Lösungsmittel, zugegeben. Die Zufuhr kann in gasförmiger oder flüssiger Form erfolgen. Bei der Zugabe in flüssiger Form kann reines, flüssiges Alkin oder auch eine Lösung in einem Lösungsmittel eingesetzt werden. Flüssiges Reaktionsgemisch wird kontinuierlich entfernt und das gebildete Alkenylphosphonsäure-Derivat in einer nachgeschalteten Stufe, beispielsweise destillativ oder extraktiv, isoliert. Gegebenenfalls werden auch höhersiedende Nebenprodukte abgetrennt. Das verbleibende Gemisch, welches hauptsächlich nicht-umgesetztes Phosphonsäure-Derivat und gegebenenfalls das eingesetzte Lösungsmittel enthält, kann gegebenenfalls wieder rückgeführt werden.

Das erfindungsgemäße Verfahren ermöglicht die Herstellung von Alkenylphosphonsäure-Derivaten bei einer Reaktionstemperatur von bevorzugt unterhalb 150°C ohne Einsatz eines teueren Edelmetallkatalysators in nur einem Syntheseschritt, ausgehend von einfach zugänglichen Ausgangsverbindungen. Da es sich um eine sehr selektive Additionsreaktion handelt, werden keine Koppelprodukte und nur eine geringe Menge an Nebenprodukten gebildet. Das erfindungsgemäße Verfahren erlaubt bei guter Verfahrensökonomie eine hohe Ausbeute von deutlich über 50 %, insbesondere über 75 %, bei gegenüber EP-A1-1 203 773 reduzierten Katalysatorkosten. Sehr hohe Ausbeuten und Selektivitäten werden auch ohne Reinigung bzw. Destillation der Ausgangsverbindungen, insbesondere des Phosphonsäure-Derivats, erreicht.

Aus den erhaltenen Alkenylphosphonsäurederivaten kann durch Hydrolyse leicht die Vinylphosphonsäure hergestellt werden.

Die erhaltenen Alkenylphosphonsäure-Derivate oder die daraus hergestellte Vinylphosphonsäure eignen sich als Monomere zur Herstellung von Polymeren, welche für sich für unterschiedlichste Verwendungen eignen. Besonders geeignet sind derartige Polymere als Bindemittel für Anstrichfarben, Lacke oder sonstige Schutzüberzüge, welche insbesondere einen Korrosionsschutz bewirken.

### Beispiel

In einem Dreihalskolben, versehen mit Innenthermometer, Kühler und Gaseinleitungsrohr wurden 50g technisches Dimethylphosphit (DMP) mit 0.3mol% (bezogen auf DMP) Nickelacetat-Tetrahydrat, 0.6mol% dppp (dppp = 1,3-Bis-(diphenylphosphino)-propan) und 1 mol% DBU versetzt, die Reaktionslösung auf 95°C erhitzt und für 10 Minuten bei dieser Temperatur gerührt. Danach wurde für 1.5 Stunden lang 8l/h Acetylen bei 100°C und Atmosphärendruck in die Reaktionslösung eingeleitet. Nach destillativer Aufarbeitung wurde Vinylphosphonsäuredimethylester (VPSDME) in 87% Ausbeute isoliert.

Die Ausbeute bei der Hydrophosphonylierung von Acetylen mit technischem Dimethylphosphit wurde unter Zusatz verschiedener Basen bestimmt. Die Auswertung und Bestimmung der Gewichtsanteile im Reaktionsgemisch erfolgte mittels Gaschromatographie unter Verwendung von NMP als internem Standard. Alle Basen wurden in einer Menge von 1 mol % bezogen auf Dimethylphosphit eingesetzt.

| Nr. | Ausbeute [%] | Base | pKa-Wert der konjugierten Säure |
|---|---|---|---|
| 1 | 87 | 1,8-Diazabicyclo[5.4.0]undec-7-en (DBU) | 12 |
| 2 * | 78 | Methylimidazol | 7,2 |
| 3 * | 55 | 1,4-Diazabicyclo[2.2.2]octan | 8,93 |
| 4 * | 49 | Imidazol | 6,95 |
| 5 * | 47 | Pyridin-2-carboxyaldehyd | 6,5 |
| 6 * | 39 | Benzylamin | 9,36 |
| 7 * | 35 | Piperidin | 11,12 |
| 8 * | 22 | Kein Additiv | - |
| 9 * | 21 | Anilin | 3,6 |
| 10 * | 14 | Pyrazol | 2,5 |
| 11 * | 9 | Pyrrol | -9 |
| 12 * | 6 | Tetrazol als Acetonitril-Lösung | 4,9 |
| 13 * | 1 | Pyridin | 5,06 |

| | | | |
|---|---|---|---|
| * Vergleichsbeispiele | | | |

## Patentansprüche

1. Verfahren zur Herstellung eines Alkenylphosphonsäure-Derivats durch Umsetzung eines Phosphonsäure-Derivats, wobei es sich um eine Verbindung der Formel II handelt 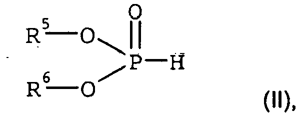 in der R⁵ und R⁶ jeweils unabhängig voneinander
C₁- bis C₁₂-Alkyl, C₆- bis C₁₀-Aryl, C₇- bis C₁₀-Aralkyl oder C₇- bis C₁₀-Alkaryl bedeuten,
mit einem Ethin oder Propin in Gegenwart eines Komplexkatalysator-Systems und 0,05 bis 5 mol%, bezogen auf das Phosphonsäure-Derivat, einer Base, deren konjugierte Säure einen pKa Wert in Dimethylsulfoxid (25°C, 1 bar) von 11,5 bis 20 hat.

2. Verfahren gemäß Anspruch 1, **dadurch gekennzeichnet, dass** es sich bei dem Phosphonsäurederivat um den Dimethylester, den Diethylester, den Dipropylester, den Dibutylester, den Di-(2-ethylhexyl)-ester oder den Diphenylester der Phosphonsäure handelt.

3. Verfahren gemäß einem der Ansprüche 1 oder 2, **dadurch gekennzeichnet, dass** das Komplexkatalysator-System
(a) Nickel,
(b) mindestens ein Phosphin mit mindestens zwei dreibindigen Phosphoratomen und gegebenenfalls zusätzlich
(c) mindestens ein Phosphin mit einem dreibindigen Phosphoratom
enthält.

4. Verfahren nach Anspruch 3, **dadurch gekennzeichnet, dass** es sich bei dem Phosphin mit mindestens zwei dreibindigen Phosphoratomen (b) um ein Phosphin der allgemeinen Formel (I) 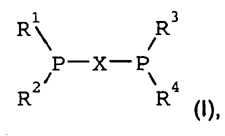 in der R¹, R², R³ und R⁴ jeweils unabhängig voneinander einen Kohlenstoff enthaltenden organischen Rest bedeuten und X für eine Kohlenstoff enthaltende organische Brückengruppe steht, handelt.

5. Verfahren nach Anspruch 4, **dadurch gekennzeichnet, dass** beim Phosphin (I) X für eine unsubstituierte oder substituierte, aliphatische, aromatische oder araliphatische Gruppe mit 1 bis 8 Atomen in der Kette und insgesamt nicht mehr als 20 Kohlenstoffatomen steht.

6. Verfahren nach einem der Ansprüche 4 bis 5, **dadurch gekennzeichnet, dass** beim Phosphin (I) R¹ bis R⁴ jeweils eine 2-Methyl-2-propyl- oder jeweils eine Phenyl-Gruppe bedeuten und X für eine 1,2-Ethylen-, 1,3-Propylen-, 1,4-Butylen-oder o-Xylylen-Gruppe steht.

7. Verfahren nach einem der Ansprüche 3 bis 6, **dadurch gekennzeichnet, dass** es sich bei dem Phosphin mit einem dreibindigen Phosphoratom (c) um ein Phosphin der allgemeinen Formel (IV) 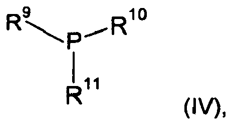 in der R⁹, R¹⁰ und R¹¹ jeweils unabhängig voneinander einen Kohlenstoff enthaltenden organischen Rest bedeuten, handelt.

8. Verfahren nach r Anspruch 7, **dadurch gekennzeichnet, dass** beim Phosphin (IV) R⁹, R¹⁰ und/oder R¹¹ unabhängig voneinander einen unsubstituierten oder substituierten C₃- bis C₁₂-Alkylrest, bei dem an das α-Kohlenstoffatom höchstens ein Atom aus der Reihe Wasserstoff, Fluor, Chlor, Brom und Iod gebunden ist, bedeuten;
und/oder R⁹, R¹⁰ und/oder R¹¹ unabhängig voneinander einen unsubstituierten oder substituierten aromatischen Rest mit 6 Ringatomen, bei dem ein, zwei oder drei Ringatome durch Stickstoff substituiert sein können, bedeuten;
und/oder R⁹ zusammen mit R¹⁰ eine unsubstituierte oder substituierte, aliphatische, aromatische oder araliphatische Gruppe mit 4 bis 7 Atomen in der Kette und insgesamt nicht mehr als 30 Kohlenstoffatomen, bedeuten.

9. Verfahren nach einem der Ansprüche 1 bis 8, **dadurch gekennzeichnet, dass** man 0,01 bis 10 Mol.% Nickel des Komplexkatalysator-Systems, bezogen auf das umzusetzende Phosphonsäure-Derivat einsetzt.

10. Verfahren gemäß einem der Ansprüche 1 bis 9, **dadurch gekennzeichnet, dass** es sich bei der Base um eine organische Stickstoffverbindung handelt.

11. Verfahren gemäß einem der Ansprüche 1 bis 10, **dadurch gekennzeichnet, dass** es sich bei der Base um 1,8-Diazabicyclo[5.4.0]undec-7-en (DBU) handelt.

12. Verfahren nach einem der Ansprüche 1 bis 11 zur Herstellung eines Vinylphosphonsäuredialkylesters durch Umsetzung eines entsprechenden Phosphonsäuredialkylesters mit Acetylen.

## Claims

1. A process for preparing an alkenylphosphonic acid derivative by reacting a phosphonic acid derivative, where said phosphonic acid derivative is a compound of formula II 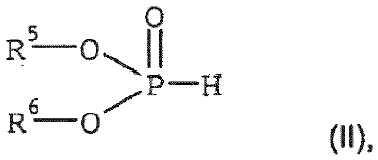 where R⁵ and R⁶ are each, independently of one another, C₁-C₁₂-alkyl, C₆-C₁₀-aryl, C₇-C₁₀-aralkyl or C₇-C₁₀-alkaryl, with an ethyne or propyne in the presence of a complex catalyst system and from 0.05 to 5 mol%, based on the phosphonic acid derivative, of a base whose conjugate acid has a pKa in dimethyl sulfoxide (25°C, 1 bar) of from 11.5 to 20.

2. The process according to claim 1, wherein the phosphonic acid derivative is the dimethyl ester, the diethyl ester, the dipropyl ester, the dibutyl ester, the di(2-ethylhexyl)ester or the diphenyl ester of phosphonic acid.

3. The process according to either of claims 1 and 2, wherein the complex catalyst system comprises
(a) nickel,
(b) at least one phosphine having at least two trivalent phosphorus atoms and optionally also
(c) at least one phosphine having one trivalent phosphorus atom.

4. The process according to claim 3, wherein the phosphine having at least two trivalent phosphorus atoms (b) is a phosphine of the general formula (I) 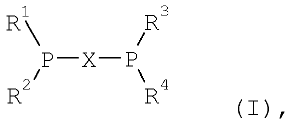 where R¹, R², R³ and R⁴ are each, independently of one another, a carbon-comprising organic radical and X is a carbon-comprising organic bridging group.

5. The process according to claim 4, wherein, in the phosphine (I), X is an unsubstituted or substituted, aliphatic, aromatic or araliphatic group having from 1 to 8 atoms in the chain and a total of not more than 20 carbon atoms.

6. The process according to either of claims 4 and 5, wherein, in the phosphine (I), R¹ to R⁴ are each a 2-methyl-2-propyl or phenyl group and X is a 1,2-ethylene, 1,3-propylene, 1,4-butylene or o-xylylene group.

7. The process according to any of claims 3 to 6, wherein the phosphine having one trivalent phosphorus atom (c) is a phosphine of the general formula (IV) 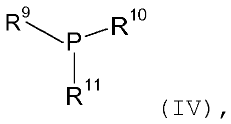 where R⁹, R¹⁰ and R¹¹ are each, independently of one another, a carbon-comprising organic radical.

8. The process according to claim 7, wherein, in the phosphine (IV), R⁹, R¹⁰ and/or R¹¹ are each, independently of one another, an unsubstituted or substituted C₃-C₁₂-alkyl radical in which not more than one atom from the group consisting of hydrogen, fluorine, chlorine, bromine and iodine is bound to the α-carbon atom;
and/or R⁹, R¹⁰ and/or R¹¹ are each, independently of one another, an unsubstituted or substituted aromatic radical which has 6 ring atoms and in which one, two or three ring atoms may be replaced by nitrogen;
and/or R⁹ together with R¹⁰ form an unsubstituted or substituted, aliphatic, aromatic or araliphatic group having from 4 to 7 atoms in the chain and a total of not more than 30 carbon atoms.

9. The process according to any of claims 1 to 8, wherein from 0.01 to 10 mol% of nickel of the complex catalyst system, based on the phosphonic acid derivative to be reacted, is used.

10. The process according to any of claims 1 to 9, wherein the base is an organic nitrogen compound.

11. The process according to any of claims 1 to 10, wherein the base is 1,8-diazabicyclo[5.4.0]undec-7-ene (DBU).

12. The process according to any of claims 1 to 11 for preparing a dialkyl vinylphosphonate by reacting a corresponding dialkyl phosphonate with acetylene.

## Revendications

1. Procédé pour la préparation d'un dérivé d'acide alcénylphosphonique, par mise en réaction d'un dérivé d'acide phosphonique, consistant en un composé de formule II 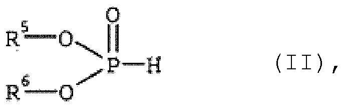 dans laquelle R⁵ et R⁶ représentent chacun indépendamment l'un de l'autre
un groupe alkyle en C₁-C₁₂, aryle en C₆-C₁₀, aralkyle en C₇-C₁₀ ou alkaryle en C₇-C₁₀,
avec un éthyne ou propyne en présence d'un système de catalyseur complexe et de 0,05 à 5 % en moles, par rapport au dérivé d'acide phosphonique, d'une base, dont l'acide conjugué a un pKa dans du diméthylsulfoxyde (25 °C, 1 bar) de 11,5 à 20.

2. Procédé selon la revendication 1, **caractérisé en ce que** le dérivé d'acide phosphonique consiste en l'ester diméthylique, l'ester diéthylique, l'ester dipropylique, l'ester dibutylique, l'ester di-(2-éthyl-hexylique) ou l'ester diphénylique de l'acide phosphonique.

3. Procédé selon la revendication 1 ou 2, **caractérisé en ce que** le système de catalyseur complexe contient
(a) du nickel,
(b) au moins une phosphine comportant au moins deux atomes de phosphore à trois liaisons et éventuellement en outre
(c) au moins une phosphine comportant un atome de phosphore à trois liaisons.

4. Procédé selon la revendication 3, **caractérisé en ce que** la phosphine (b) comportant au moins deux atomes de phosphore à trois liaisons consiste en une phosphine de formule générale (I) 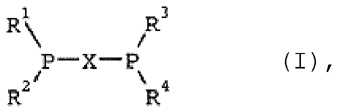 dans laquelle R¹, R², R³ et R⁴ représentent chacun indépendamment les uns des autres un radical organique contenant du carbone et X représente un groupe organique pontant contenant du carbone.

5. Procédé selon la revendication 4, **caractérisé en ce que** dans la phosphine (I) X représente un groupe aliphatique, aromatique ou araliphatique substitué ou non substitué, ayant de 1 à 8 atomes dans la chaîne et ne contenant au total pas plus de 20 atomes de carbone.

6. Procédé selon la revendication 4 ou 5, **caractérisé en ce que** dans la phosphine (I) R¹ à R⁴ représentent chacun un groupe 2-méthyl-2-propyle ou chacun un groupe phényle et X représente un groupe 1,2-éthylène, 1,3-propylène, 1,4-butylène ou oxylylène.

7. Procédé selon l'une quelconque des revendications 3 à 6, **caractérisé en ce que** la phosphine (c) comportant un atome de phosphore à trois liaisons consiste en une phosphine de formule générale (IV) 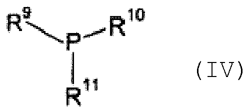 dans laquelle R⁹, R¹⁰ et R¹¹ représentent chacun indépendamment un radical organique contenant du carbone.

8. Procédé selon la revendication 7, **caractérisé en ce que** dans la phosphine (IV) R⁹, R¹⁰ et/ou R¹¹ représentent chacun indépendamment un radical alkyle en C₃-C₁₂ substitué ou non substitué, dans lequel à l'atome de carbone α est lié au maximum un atome choisi dans la série hydrogène, fluor, chlore, brome et iode ;
et/ou R⁹, R¹⁰ et/ou R¹¹ représentent chacun indépendamment un radical aromatique substitué ou non substitué ayant 6 atomes formant le cycle, dans lequel un, deux ou trois atomes formant le cycle peuvent être remplacés par des atomes d'azote ;
et/ou R⁹ conjointement avec R¹⁰ représentent un groupe aliphatique, aromatique ou araliphatique substitué ou non substitué ayant de 4 à 7 atomes dans la chaîne et ne comportant au total pas plus de 30 atomes de carbone.

9. Procédé selon l'une quelconque des revendications 1 à 8, **caractérisé en ce qu'**on utilise de 0,01 à 10 % en moles de nickel du système de catalyseur complexe, par rapport au dérivé d'acide phosphonique à mettre en réaction.

10. Procédé selon l'une quelconque des revendications 1 à 9, **caractérisé en ce que** la base consiste en un composé organique azoté.

11. Procédé selon l'une quelconque des revendications 1 à 10, **caractérisé en ce que** la base consiste en 1,8-diazabicyclo[5.4.0]undéc-7-ène (DBU).

12. Procédé selon l'une quelconque des revendications 1 à 11, pour la préparation d'un vinylphosphonate de dialkyle par mise en réaction d'un phosphonate de dialkyle correspondant avec de l'acétylène.
